Europäisches Patentamt

European Patent Office

Office européen des brevets

(11) Veröffentlichungsnummer: **0 442 056 A2**

## (12) EUROPÄISCHE PATENTANMELDUNG

(21) Anmeldenummer: **90122760.3**

(22) Anmeldetag: **28.11.90**

(51) Int. Cl.⁵: **G02B 6/38**

(30) Priorität: **16.02.90 DE 9001866 U**

(43) Veröffentlichungstag der Anmeldung:
**21.08.91 Patentblatt 91/34**

(84) Benannte Vertragsstaaten:
**AT BE CH DE FR GB IT LI NL SE**

(71) Anmelder: **Siemens Aktiengesellschaft**
**Wittelsbacherplatz 2**
**W-8000 München 2(DE)**

(72) Erfinder: **Krausse, Peter**
**Flurstrasse 1**
**W-8011 Aschheim(DE)**

(54) **Lichtwellenleiter-Steckverbindung.**

(57) Bei einer Lichtwellenleiter-Steckverbindung für den Gestelleinbau ist ein Stecker axial starr und der Gegenstecker axial gefedert. Die Zentrierhülse für beide Stecker befindet sich in einer Fassung in der Einsatzrückwand und der axial gefederte Gegenstecker im Einschub. Beide Steckelemente sind auf einer Mischleiste (DIN 41612) befestigt.

FIG 1

## LICHTWELLENLEITER-STECKVERBINDUNG

Die Erfindung bezieht sich auf eine Lichtwellenleiter-Steckverbindung für den Gestelleinbau, bei der der eine, insbesondere axial feststehende Stecker sich in einer gemischt bestückten Steckerleiste in einer Aufnahme befindet und in der gegenteiligen Leiste der axial bewegliche Stecker und wobei beide Stecker über eine Zentrierbuchse aufeinander zwecks stirnseitigem Kontakt zentriert sind.

Derartige Anordnungen sind beispielsweise durch das DE-GM 89 01 052 bekannt.

Der Erfindung liegt die Aufgabe zugrunde, ausgehend davon, eine hinsichtlich der Montage und universalen Anwendung verbesserte Lösung anzugeben.

Dies wird bei der eingangs geschilderten Anordnung neuerungsgemäß dadurch erreicht, daß sich die Zentrierhülse in einem Aufnahmerohr befindet und mittels einer Gewindehülse in ihr befestigt ist und daß sich in der anderen gemischt bestückten Leiste der axial gefederte Zentrierstift befindet und dort ebenfalls mittels einer Gewindebuchse mit dieser und der Axialfeder vorgespannten Aufnahme des Gegensteckers verschraubt.

Weitere vorteilhafte Ausgestaltungen der Erfindung finden sich in den Unteransprüchen.

Die Erfindung wird nun anhand von in den Figuren dargestellten Ausführungsbeispielen näher erläutert.

Die Figur 1    zeigt eine perspektivische Darstellung der gesamten Steckerkombination.

Die Figur 2    zeigt eine Explosionsdarstellung der Zentrierhülse und deren Montage in der gemischt bestückten Leiste und rechts daneben den Zusammenbau.

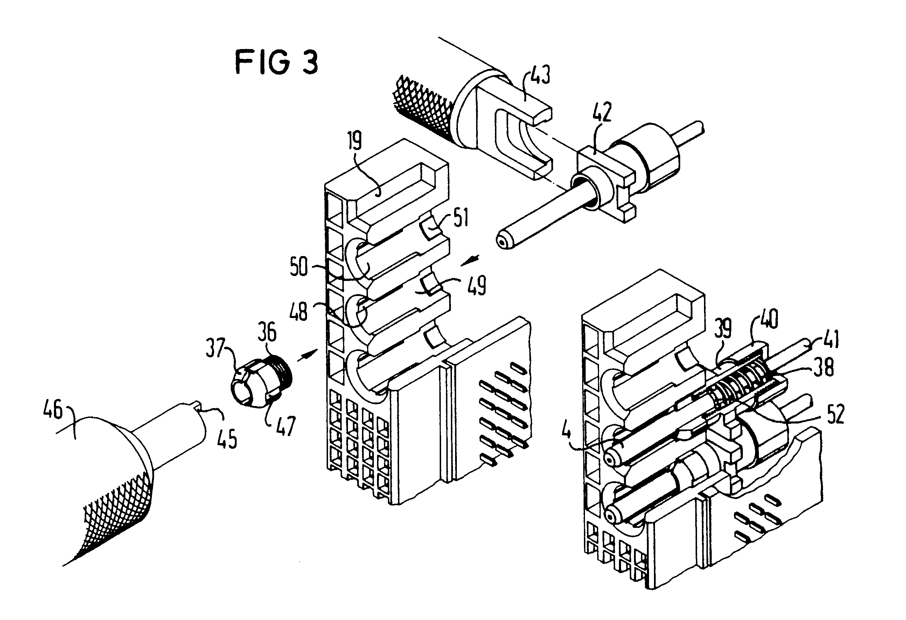

Die Figur 3    zeigt in gleicher Art den längsgefederten Steckerstift.

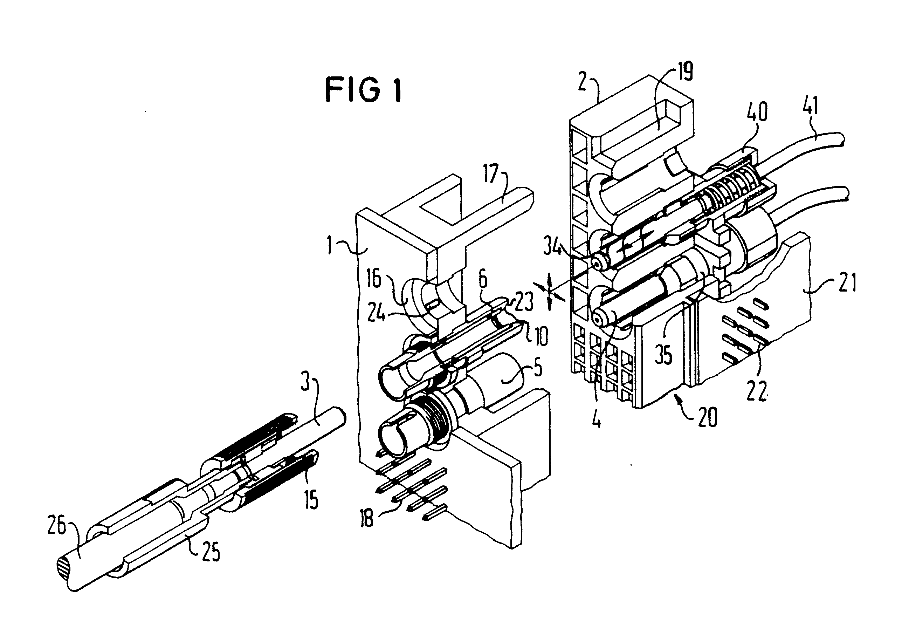

Die Figur 1 zeigt in Explosionsdarstellung links einen gemäß DIN 47256 genormten Lichtwellenleiter-Stecker mit axial starrer Befestigung. Rechts daneben ist eine sogenannte Mischleiste gemäß DIN 41612 oder eine unter dem Warenzeichen SIEDECON gemischt bestückte Leiste dargestellt. Diese gemischt bestückte Leiste 1 hat genormte Durchbrüche 16, in die bei üblicher Bestückung Koaxial- oder Hochstromkontakte eingefügt sind. Die Leiste 1 bildet normalerweise den rückseitigen Teil eines sogenannten Einsatzes oder auch die gestellseitige Aufnahme. Mit 18 sind übliche Wrapstifte bezeichnet, die auf der Frontseite durchgeführt und als Steckerstifte ausgebildet sind. Diese an sich bekannten Leisten haben zum Einschub hin Codierstifte 17 zwecks Unverwechselbarkeit. In diesem Beispiel greift der Codierstift 17 in eine entsprechende Ausnehmung 19 in der Gegenleiste 2, die wiederum die Rückseite des Einschubs 20 bildet. Der Einschub 20 besteht im wesentlichen aus einer mit Bauelementen bestückten Leiterplatte 21, die beispielsweise auch Wrap- oder Lötstifte 22 trägt.

Im Durchbruch 16 der Leiste 1 ist eine Fassung 5 für die zwei Lichtwellenleiter-Stecker aufeinander zentrierenden Hülse 6 befestigt. Diese Hülse 6 besteht aus einem Hartmetall oder Keramikmaterial und ist vorzugsweise längsgeschlitzt. Die Fassung 5 ist am einschubseitigen Ende frontseitig kegelig eingefast 23, um die Zentrierung zu erleichtern. Die Fase 23 bildet einen Teil eines nach innen ragenden Bundes 10, der den einseitigen Anschlag für die Buchse 6 darstellt. Die die Fassung 5 bildende Buchse hat außenseitig einen Ringbund 11, der mit mehreren Längsnuten versehen ist. Diese Nuten sind für entsprechende Längsnasen 24 in der Mischleiste 1 vorgesehen. Diese können gleichzeitig der Verdrehsicherung zwischen Buchse 5 und Leiste 1 dienen. Auf der Kehrseite hat die Buchse 5 ein Innengewinde 9, das zum Gegengewinde 13 einer Gewindehülse 7 paßt. Diese Gewindehülse 7 bewirkt einerseits die Halterung für die Zentrierhülse 6 und ist über einen Ring 8 durch die Bohrung 16 mit der Buchse 5 verschraubt. Ein gegenüber dem Gewinde 13 überhöhtes Außengewinde 14 ist passend für das Innengewinde der Überwurfmutter 5 des Steckerstiftes 3 ausgebildet. Der Steckerstift 3 ist, axial starr in einer Fassung 25 für den Lichtwellenleiter 26 befestigt.

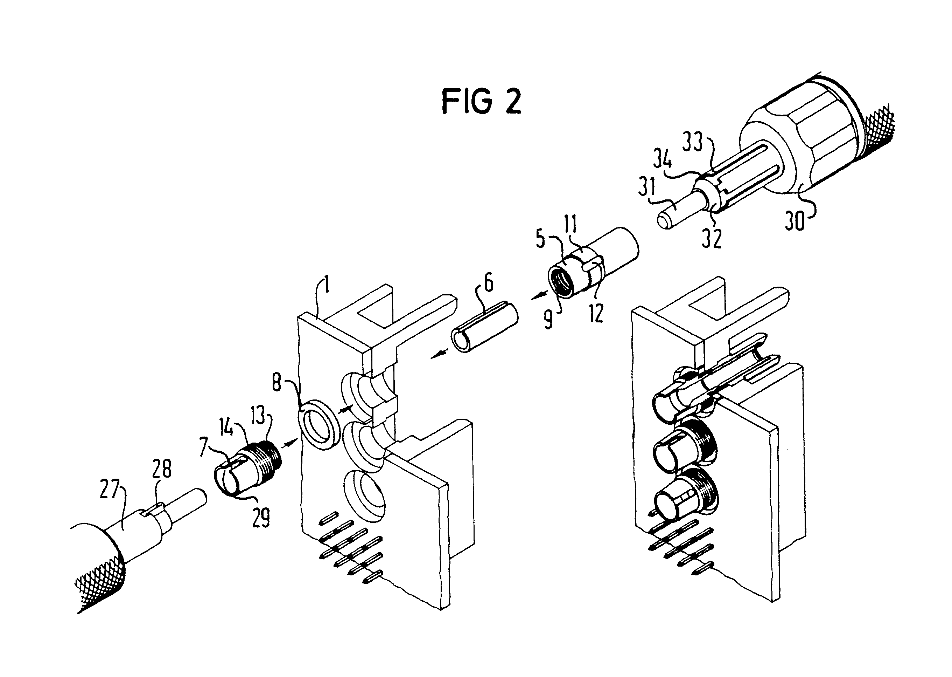

Die im einzelnen in der Figur 2 dargestellte Halterung der Zentrierhülse 6 samt Buchse 5 benötigt Zusatzwerkzeuge für die Montage. Das eine Zusatzwerkzeug für die Gewindehülse 7 hat eine Nase 28, die in eine Kerbe 29 paßt. Da die Buchse 5 für den Fall, daß eine Verdrehsicherung über Längsnuten 12 nicht gegeben ist, wie beim Einbau in eine SIEDECON-Leiste, ist ein weiteres Zusatzwerkzeug 30 auf der Gegenseite vorgesehen. Dieses Zusatzwerkzeug hat frontseitig einen längsgefederten Stift 31, der in die Zentrierhülse 6 paßt. Ferner hat dieses Werkzeug auf der Fassung 32 für den Stift 31 Zungen 33, die frontseitig nasenförmig und derart ausgebildet sind, daß sie in entsprechend nicht näher dargestellte Nuten der Fase 23 eingreifen. Mit den beiden Werkzeugen läßt sich für jeden Fall die Befestigung der Buchse 5 in der Leiste 1 bewerkstelligen.

In der einschubseitigen gemischt bestückten Leiste 2 ist der Gegenstecker 4 befestigt. Dieser mit Spiralrillen 34 zur Entlüftung versehene Stift sitzt in einer dreiteilig ausgebildeten Fassung 35. Die Fassung hat steckerseitig ein Innengewinde, in welches das Außengewinde 36 einer Gewindebuchse 37 eingeschraubt werden kann. Letztlich bildet das hintere Ende der Buchse 37 den Anschlag für eine Feder 38, die die Axialvorspannung für den Steckerstift 4 bewirkt. Das durch die Gewindebuchse 39 gebildete Gehäuse für die Feder 38 ist rückseitig durch eine Überwurfmutter 40, die sich über den Lichtwellenleiter 41 erstreckt, gebildet. Ferner ist auf der Buchse 39 außenseitig ein Vierkant 42 angeordnet, der entweder in eine entsprechende Ausnehmung in einer gewissen Ausführung der Mischleiste paßt oder mittels eines Zusatzwerkzeuges in Form eines Vierkantschlüssels 43 drehsicher gehalten werden kann. Die Gewindebuchse 37 kann von der anderen Seite über den Steckerstift 4 hinweg in die Buchse 39 eingeschraubt werden. Für die Festmontage hat die Gewindebuchse 37 frontseitig eine Nut 44, in die der Zapfen 45 eines weiteren Zusatzwerkzeuges 46 eingreift. Dieses Zusatzwerkzeug hat frontseitig eine Bohrung, in die der Stift 4 eingreifen kann.

Die gesamte Fassung für den Stift 4 mit seinem Sprengring 52 ist in Radialrichtung mit so großem Spiel ausgestattet, daß sich der Stift 4 beim Stecken auf die Fase 23 schwimmend zentrieren kann. Weitere Längsnuten 47 auf der Gewindebuchse 37 sind deshalb vorgesehen, weil gewisse Ausführungen von Mischleisten 2 für die Befestigung von beispielsweise Koaxialsteckern zu deren Verdrehsicherung Längsnasen 48 haben. Die Buchse kann bei geeigneter Drehstellung durch diese Längsnasen hindurchgeführt werden und schließlich im drehfreien Bereich 49 des Druchbruchs 50 in 2 in die Buchse 39 eingeschraubt werden. Die nach innen im Durchbruch 50 vorgesehenen Erhebungen 51 dienen normalerweise der Einschnappung für Koaxialstecker und in diesem Fall ebenfalls der Axialsicherung der Buchse 39 in der Aufnahme 2.

Derartige Steckerelemente sind besonders für sogenannte single$_\mu$-mode-Fasern geeignet.

**Patentansprüche**

1. Lichtwellenleiter-Steckverbindung für den Gestelleinbau, bei der der eine, insbesondere axial feststehende Stecker sich in einer gemischt bestückten Steckerleiste (Mischleiste) in einer Aufnahme befindet und in der gegenteiligen Leiste der axial bewegliche Stecker und wobei beide Stecker über eine Zentrierbuchse aufeinander zwecks stirnseitigem Kontakt zentriert sind, **dadurch gekennzeichnet**, daß sich die Zentrierhülse (6) in einem Aufnahmerohr (5) befindet und mittels einer Gewindehülse (7) in ihr und der einen Mischleiste (1) befestigt ist und daß sich in der anderen Mischleiste (2) der mittels Axialfeder vorgespannte Gegenstecker befestigt ist.

2. Lichtwellenleiter-Steckverbindung nach Anspruch 1, **dadurch gekennzeichnet**, daß die insbesondere aus einem länggeschlitzten Röhrchen aus keramischem Material bestehende Zentrierhülse (6) sich in einem Aufnahmerohr (5) befindet, das in Richtung Gegenstecker einen inneren Bund (10) hat und auf der Gegenseite ein Gewinde (9), in das das Außengewinde (13) einer Gewindehülse (7) durch die Mischleiste (1) hindurch verschraubt ist.

3. Lichtwellenleiter-Steckverbindung nach einem der vorhergehenden ansprüche, **daduch gekennzeichnet**, daß sich in der Gegenleiste (2) der axialgefederte Steckerstift (4) schwimmend in einem Gehäuse (39) befindet, das steckerseitig ein Innengewinde hat, in das das Gegengewinde einer Gewindebuchse (37) in einem Durchbruch (50) der Mischleiste (2) einschraubbar ist und das Federgehäuse zum Lichtwellenleiter-Kabel hin mittels einer Überwurfmutter (40) abgeschlossen ist.

4. Lichtwellenleiter-Steckverbindung nach Anspruch 3, **dadurch gekennzeichnet**, daß der einschubseitige Stecker (4) mit Radialspiel in der Gewindebuchse (37) gelagert ist und an der Frontseite kegelig angefast und am Mantel mit Spiralrillen (34) versehen ist.

5. Lichtwellenleiter-Steckverbindung nach Anspruch 4, **dadurch gekennzeichnet**, daß der axial gefederte Steckerstift (4) am, in Steckrichtung betrachtet, hinteren Teil einen Sprengring trägt und anschließend daran ein Röhrchen, in dem sich die Faser, der Lichtwellenleiter befindet und um das sich die Axialfeder erstreckt, die rückseitig an die Überwurfmutter (40) anschlägt.

6. Lichtwellenleiter-Steckverbindung nach einem der vorhergehenden Ansprüche, **dadurch gekennzeichnet**, daß die Mischleiste (2) unmittelbar auf einer Leiterplatte (21) eines Steckeinschubs befestigt ist.

FIG 1

EP 0 442 056 A2

FIG 2

FIG 3